# EUROPEAN PATENT APPLICATION

(11) **EP 3 919 966 A1**
(43) Date of publication of application: **08.12.2021**
(21) Application number: 21176896.5
(22) Date of filing: 31.05.2021
(51) Int. Cl.: G02C 7/10

(54) **METHOD FOR DETERMINING A COLORED FILTER APPLIED TO A SPECTACLE LENS AND ASSOCIATED DEVICE**

(30) Priority: 03.06.2020 EP 20315294
(71) Applicant: ESSILOR INTERNATIONAL, 94220 Charenton-Le-Pont (FR)
(72) Inventor: SPIEGEL, Daniel, SINGAPORE (SG)
(74) Representative: Korakis-Ménager, Sophie

(57) **Abstract**

The invention is directed to a method for determining at least one colored filter suitable for being applied to an ophthalmic lens in order to improve or maintain the visual comfort and/or the visual performance of an individual who wears said ophthalmic lens, said method comprising: a) selecting (100) at least one source of light scattering intended to be placed in front of an eye of the individual based on the degree of scattering needed; b) visually presenting (200) at least one image to the individual through said at least one source of light scattering; c) measuring (300) the individual's visual performance when said at least one image is visually presented through said at least one source of light scattering; d) providing (400) at least one colored filter intended to be placed in front of an eye of the wearer; e) visually presenting (500) the same at least one image of step b) to said individual through said at least one source of light scattering and said at least one colored filter; f1) measuring (600) the individual's visual performance when said at least one image is visually presented through said at least one source of scattering and said at least one colored filter; g) comparing (700) the individual's visual performance measured in step c) with the individual's visual performance measured in step f1); h) determining (800) if said colored filter is a suitable colored filter based on the result of the comparison of step g).

## Description

### TECHNICAL FIELD OF THE INVENTION

The present invention generally relates to the field of ophthalmic optics.

More particularly, it relates to the field of the prescription of a colored filter to an individual who wears ophthalmic lenses with said filter.

Even more particularly, it relates to a method for determining at least one colored filter suitable for being applied to an ophthalmic lens in order to improve or maintain the visual comfort and/or the visual performance of this individual.

### TECHNOLOGICAL BACKGROUND

Colored filters are currently used to improve or maintain the visual comfort of the wearer in a particular situation. More particularly, colored filters allow to improve contrast perception under sub-optimal visual conditions (fog, rain, night, etc.).

Solutions exist that allow one or more ophthalmic lenses equipped with filters to be prescribed to a wearer.

For example, from patent application FR 1650383 in the name of the applicant, a method for determining a filter for an ophthalmic lens intended to be placed in front of the eye of a wearer, said filter being able to improve or to maintain the visual comfort and/or visual performance of said wearer, is in particular known.

The determining method of document FR 1650383 comprises a step of measuring a quantity representative of a sensitivity of the eye of the wearer to a characteristic light flux, and a step of determining at least one optical characteristic of said filter depending on the measured representative quantity.

According to document FR 1650383, *"characteristic light flux",* corresponds to:
- either a "*real*" light flux to which the wearer is subjected during a given task: the characteristic light flux is then characteristic of the ambient luminous environment in which the wearer will be when performing the visual task;
- or to an *"artificial"* light flux in the sense that it at least partially reproduces the light flux to which the wearer will be subjected: the characteristic light flux is then representative of at least one light source that causes the wearer visual discomfort or to lose visual performance.

As previously stated, colored filters allow to improve contrast perception under sub-optimal visual conditions such as fog, rain, night, etc. These conditions have a thing in common: they all produce a significant amount of light scattering.

However, none of the known solutions take into account said sub-optimal visual situations, in particular optical scattering, during the assessment of the benefits of colored filters.

Moreover, most of the well-controlled in-lab studies evaluating several aspects of visual function fail to demonstrate a substantial visual benefit of colored filters. This may be attributed to a considerable variability in methods, target scale, filters used, and/or participants' characteristics. In addition, visual research studies are often conducted in normal in-lab conditions on subjects with no ocular pathologies and over all good vision.

Thus, there is a need for a reliable method that allows demonstrating the visual benefit of colored filters so as to determine a colored filter to be prescribed in order to improve or maintain the visual comfort and/or the visual performance of an individual.

### SUBJECT OF THE INVENTION

In order to remedy the aforementioned drawback of the prior art, the present invention proposes a method allowing to determine a suitable colored filter and to demonstrate its benefit based on the assessment of the effects of said colored filter under sub-optimal visual conditions.

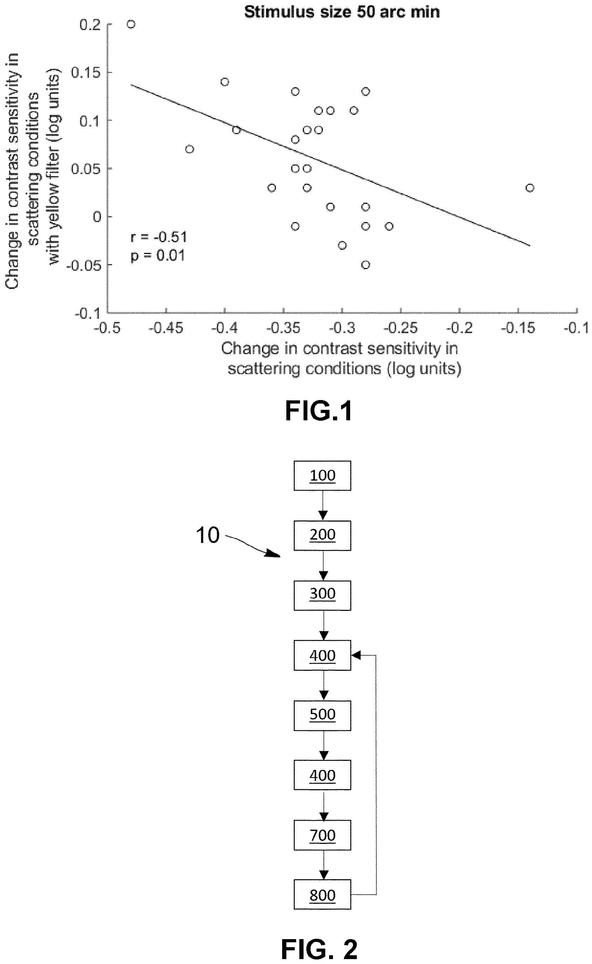

In reference to figure 1, contrast sensitivity decreases under scattering conditions induced for example by a Bangerter filter, while, in most of the cases, it increases after introducing a yellow filter such as Kodak Wratten 12 yellow filter. Moreover, a negative correlation is observed: the more decrease of contrast sensitivity under scattering conditions (*i.e.* more negative values on the horizontal axis), the more improvement with adding the yellow filter (*i.e.* more positive values on the vertical axis). In other words, the more affected contrast sensitivity is under scattering conditions, the more improvement can be expected with using a colored filter under scattering conditions. Thus, the present invention relates to a method for determining at least one colored filter suitable for being applied to an ophthalmic lens in order to improve or maintain the visual comfort and/or the visual performance of an individual who wears said ophthalmic lens, said method comprising:
a) selecting at least one source of light scattering intended to be placed in front of an eye of the individual based on the degree of scattering needed;
b) visually presenting at least one image to the individual through said at least one source of light scattering;
c) measuring the individual's visual performance when said at least one image is visually presented through said at least one source of light scattering;
d) providing at least one colored filter intended to be placed in front of an eye of the wearer;
e) visually presenting the same at least one image of step b) to said individual through said at least one source of light scattering and said at least one colored filter;
f1) measuring the individual's visual performance when said at least one image is visually presented through said at least one source of scattering and said at least one colored filter;
g) comparing the individual's visual performance measured in step c) with the individual's visual performance measured in step f1);
h) determining if said colored filter is a suitable colored filter based on the result of the comparison of step g).

Thus, by virtue of the invention, it is possible to evaluate and demonstrate the benefit of a colored filter for an individual and therefore determine the most suitable colored filter for said individual.

The invention has the advantage of exposing the future wearer of the colored filter to an image under sub-optimal visual conditions in order to evaluate and demonstrate the benefits of a colored filter under visual conditions that are identical or almost identical to those under which colored filters allow to improve contrast perception.

The invention defines a set of steps of exposure to at least one image under sub-optimal visual conditions in order to evaluate the rendering and/or the benefit achieved with a trial filter, to assist with the prescription of one or more optimal colored filters, and to differentiate between said filters.

The method according to the invention allows the right colored filter to be suitably prescribed to the individual.

By virtue thereof, a new service may be offered by eye care professionals who can easily measure and demonstrate the benefits of colored filters and thus determine and recommend the most suitable colored filter for their customer.

The invention is described in more detail below by way of the figures that show several preferred embodiments of the invention.
Figure 1 is a scatter plot showing the change in contrast sensitivity (in logarithmic units) under scattering conditions with a yellow filter (vertical axis) as a function of the change in contrast sensitivity (in logarithmic units) under scattering conditions (horizontal axis), using a middle size stimulus.
Figure 2 is a schematic diagram 10 showing the various steps of an embodiment of the determining method according to the invention.
Figure 3 is a box plot of the change in contrast sensitivity (in logarithmic units) under scattering conditions and with a Kodak Wratten 12 yellow filter (vertical axis) for different stimulus sizes (in arc minutes) (horizontal axis).
Figure 4 shows an ophthalmic trial frame with multiple slots allowing to implement the determining method according to the invention.
Figure 5 shows an ophthalmic frame implemented with a clip-on having multiple slots allowing to implement the determining method according to the invention.

As intended herein, in step a), the "source of light scattering" can be of any type provided that it can be placed in front of an eye of an individual so as to produce optical scattering itself directly on the visually presented at least one image. More particularly, a source of light scattering is selected from a diffuser, a Bangerter filter, a smudged lens, a scratched lens, a polymer dispersed liquid crystal (PDLC) lens or a fog maker.

The source of light scattering according to the invention is selected based on the degree of scattering needed. More particularly, the degree of scattering can be selected and/or adapted based on different criteria such as the individual's needs, general health, visual health, ocular state, environment or the results of previous assessments, etc. The degree of scattering can vary for example by changing the source of light scattering, by using several sources of light scattering at the same time, by increasing the intensity of the optic scattering produced by the source of light scattering (more or less fog, smudged lens, etc.).

Step a) may further comprise providing a reference filter to be placed in front of the eye of the individual. In this case, steps b) to h) are each further performed in the presence of said reference filter placed in front of the eye of the individual.

As intended herein, the reference trial filter may be a median filter in the sense that it meets the visual needs of half of a representative population of individuals.

The reference filter may even be:
- the filter that the wearer usually wears (current filter);
- the filter that delivers the best performance with respect to the criterion used to select the at least one trial filter (the individual's need, environment etc...); or
- the last filter made available on the market.

As intended herein, in steps b) and e), the at least one image to be visually presented to the individual (i.e. placed before or in front of the eyes of the individual) corresponds to any type of image. The image can be a colored image or a grayscale image.

According to certain embodiments of the method of the invention, the at least one image is visually presented by a display device, such as a screen, a computer, a smartphone or a tablet, and said image is for example a video, an image, an eye chart, or any optotype.

According to other embodiments, the at least one image can be the visual environment of the individual or a printed image, a printed eye chart or a printed optotype.

In one embodiment, the eye chart is selected from a Snellen chart, a Landolt C, a logMAR chart, an E chart, a Lea test, a Tumbling E, a Golovin-Sivtsev table, a Rosenbaum chart, a Jeager chart, a sine wave grating, a square wave grating and a Gabor patch.

In another embodiment, the eye chart is selected from a Pelli-Robson chart, a Vision contrast test system (VCTS) by Vistech, a Melbourne Edge test, a Mars Letter Contrast sensitivity test, a Functional Acuity Contrast Test (FACT), a Cambridge low contrast, Regan charts, a Bailey Lovie chart, an Arden plate test, a CSV-1000 E test, a CSV-1000 RS test, a CSV-1000-S test, a CSV-1000 CVA test, a CSV-1000 LAN C test and a CSV-1000 1.5 CPD.

As intended herein, in steps c) and f1), the visual performance of an individual can be measured by assessing several parameters.

In one embodiment, this assessment may be subjective.

For example, by measuring contrast sensitivity, visual comfort, color perception, or visual/ocular fatigue, visual acuity, perception of movement or of depth, reading speed/performance, recognition of objects, measurement of the threshold beyond which the individual is discomforted by/sensitive to light.

In another embodiment, this assessment may be objective and relate to physiological data linked with visual performance and/or visual comfort such as, for example: dynamic range of the pupil, movement of the eyelids, accommodation of the eye, electro-physiological signal generated by the retina and/or the cerebral cortex (measurable via electroencephalography (EEG), electroretinography (ERG), visual evoked potentials (VEP), functional magnetic resonance imaging (fMRI) or magnetoencephalography (MEG)).

Preferably, measuring the visual performance of an individual corresponds to the assessment of contrast sensitivity. More particularly, contrast sensitivity is selected from spatial contrast sensitivity (static luminance-defined stimuli), temporal contrast sensitivity (dynamic luminance-defined stimuli), second order orientation modulation sensitivity (static or dynamic orientation-defined stimuli), second order motion modulation sensitivity (static or dynamic motion-defined stimuli), or second order contrast modulation sensitivity (static or dynamic contrast-defined stimuli).

In one embodiment, measuring the individual's visual performance of one or both eyes of the individual is based on the individual's input by verbal responses.

The individual for example verbally responds to one or more questions allowing his visual comfort and/or his visual performance to be characterized. More particularly, this corresponds to all the responses expressed by the individual either in response to a questionnaire or questions in relation to performed tests. The individual is therefore made to express what has been visually perceived or experienced. This allows the visual performance and/or visual discomfort experienced and expressed by the individual to be determined subjectively. This evaluation allows the conditions under or situations in which the wearer obtains an optimal visual performance and/or an optimal comfort, and also the conditions of discomfort and loss of visual performance, to be defined.

In another embodiment, measuring the individual's visual performance of one or both eyes of the individual is based on the individual's input using a response unit.

Said response unit may be used by the individual or by any individual who performs the test, in particular the eye care professional.

Said response unit may be a button, a computer mouse, a keyboard, a joystick, a game pad, a touch pad, a stylus pen, an image/body/gesture/face recognition unit, an eye tracker, etc.

More particularly, the individual for example responds using a response unit to one or more questions allowing his visual comfort and/or his visual performance to be characterized. More particularly, this corresponds to all the responses expressed by the individual using a response unit either in response to a questionnaire or questions in relation to performed tests. The individual is therefore made to express using a response unit what has been visually perceived or experienced. This allows the visual performance and/or visual discomfort experienced and expressed by the individual to be determined subjectively. This evaluation allows the conditions under or situations in which the wearer obtains an optimal visual performance and/or an optimal comfort, and also the conditions of discomfort and loss of visual performance, to be defined.

In another embodiment, said response unit may be an eye tracker, a pupilometer, an autorefractor, electrodes, a brain scanner, a magnetometer, etc.

More particularly, at least one parameter characteristic of a state of the ocular structure and ocular functions of the related structures is measured via neuroimaging, or via an optical, photometric, and/or neurophysiological measurement. This allows a component of the ocular or related structure to be characterized and quantified inferentially. It is therefore possible to quantify, via a physical measurement, the capacities and performance of one or more ocular or related structures in relation with the image presentation processes. This allows the visual performance and/or visual discomfort experienced by the individual to be determined objectively. Depending on the studied structure and the results obtained, the characteristics of the filter will be orientated differently in order to optimize the comfort and/or visual performance depending on the fragility/fragilities of the ocular and related structure in question.

In step d), said trial filter is provided. Providing a trial filter may be based on a selection of said trial filter. Said selection may be made on the basis of different criteria such as the individual's needs, the individual's general health, visual health, ocular state, environment or the results of previous assessments, etc.

In one particular embodiment, the data obtained from steps c) and f1) are further processed with a data processing unit during step f2) in order to visualize the obtained data, allowing for example, to easily perform comparison step g). Said obtained data may be represented by plots, graphs or tables.

More particularly, data visualization is performed via a display device such as a screen, a computer, a smartphone or a tablet. Said display device may be the same than the one used for performing steps b) and e) or a different one. Also, data visualization may be performed via a printed chart showing the results.

Advantageously, the obtained processed data is further used to simulate the decreased and/or improved vision of the individual, allowing for example to clearly show the benefits of a trial colored filter in said individual.

More particularly, said simulated decrease under scattering conditions and/or improved vision provided by a trial filter of the individual may be displayed by a display device such as a screen, a computer, a smartphone or a tablet. Said display device may be the same than the one used for performing steps b) and e) and/or f2) or a different one.

In other words, the at least one image visually presented to the individual in steps b) and e) is simulated and displayed by a displaying device such as said at least one image is seen by said individual when he is wearing the trial filter in addition to the at least one source of light scattering. In this case, the effect of the trial filter is viewed directly via the display of the simulated and displayed image.

The aim of this step is for example to allow the individual who is wearing the trial filter to clearly evaluate the benefit of the trial filter. In a particular embodiment, this step allows the individual who is wearing the trial filter to more subjectively evaluate the benefit of the trial filter, which was previously measured objectively or subjectively. More particularly, this step allows the individual who is wearing the trial filter to more subjectively evaluate the benefit of the trial filter, which was previously measured objectively or subjectively and was not able to be appreciated by the individual.

Advantageously, the method of the invention further comprises a step of adjusting the at least one image of steps b) and e).

In one embodiment, when the visually presented at least one image of steps b) and e) is visually presented by a display device, the adjustment step is performed via the display device. More particularly, said display unit is further implemented in combination with an image processing unit in order to perform said adjustment step.

In another embodiment, when the visually presented at least one image of steps b) and e) is a printed image, a printed eye chart or a printed optotype, the adjustment step is performed by changing said printed image, said printed eye chart or said printed optotype.

In a preferred embodiment, said adjusting step is based on the individual's input. The final step of determining if the colored filter is a suitable colored filter based on the result of the comparison of step g) allows the prescription of the filter to be validated or invalidated.

According to one particular embodiment of the invention, in step h), said trial filter is adopted as being said suitable colored filter if the comparison of step g) demonstrates an improvement in said individual's visual performance.

According to another particular embodiment of the invention, if the comparison of step g) demonstrates, in contrast, a degradation in said individual's visual performance, the determining method is restarted, after step h), from step d) with another trial filter being provided. In this case, provision may be made, in step e), to select the same at least one image to be visually presented or indeed a different at least one image to be visually presented, for example in order to minimize adaptation, learning effect, memorization, or to enhance compliance and engagement.

According to another particular embodiment of the invention, if the comparison of step g) demonstrates, a degradation in said individual's visual performance, the determining method is restarted, after step h), from step a) with another source of light scattering and another trial filter being selected, another source of light scattering being selected for example in order to decrease or increase its detrimental effect on visual performance. In this case, provision may be made, in steps b) and e), to select an identical at least one image to be visually presented or indeed a different at least one image to be visually presented, for example in order to minimize adaptation, learning effect, memorization, or to enhance compliance and engagement.

Thus, the determining method may be an iterative method that tends toward the colored filter that is optimal for the individual.

In order to implement the determining method described above, an associated device will be described. Said device intended to test the visual performance of an individual, comprises several slots allowing the insertion of for example, the individual's prescription, at least one source of light scattering, such as a scattering filter, an at least one trial filter.

The device is particularly suitable for implementing certain embodiments of the aforementioned determining method.

In a particular embodiment, the device is a standard ophthalmic trial frame having multiple slots or the individual's own ophthalmic frame implemented with a clip-on having multiple slots.

In another particular embodiment, the device is an ophthalmic testing device with additional slots, such as a phoropter

The device may also be an active eyewear wherein the trial filter is provided for example by an electrochromic cell, such as the one described in WO2017032649 and the scattering filter is provided for example by a polymer dispersed liquid crystal (PDLC) lens that can change electrically the light scattering state. Such technology that can deliver electrically variable haze eyewear is described for example in patent US2014226096.

The diagram 10 shows the various steps of an embodiment of a determining method according to the invention, which steps will be described in detail below.

This method aims to find a colored filter that is optimal for an individual, the function of this filter being to improve or maintain the visual comfort and/or the visual performance of said individual when the latter is wearing a pair of spectacles, to one, and preferably both, of the spectacle lenses of which said optical filter is applied.

### Step a) (block 100 of figure 2)

Step a) is a step of selecting at least one source of light scattering intended to be placed in front of an eye of the individual based on the degree of scattering needed.

As explained above, the source of light scattering is selected so as to produce optical scattering itself when it is placed in front of an eye of the individual. Said source of light scattering can be of any type, as illustrated in the examples above.

This selecting step is based on the degree of scattering needed. More particularly, the degree of scattering can be selected based on different criteria such as the individual's needs, the individual's general health, visual health, ocular state, environment or the results of previous assessments etc.

### Step b) (block 200 of figure 2)

Once the source of light scattering has been selected based on the degree of scattering needed, provision is made for a step of visually presenting at least one image to the individual through the chosen source of light scattering.

In this way, it is possible for the individual to appreciate the impact that the source of light scattering itself has directly on the visually presented at least one image, and in particular on his visual comfort and/or his visual performance.

As explained above, said visually presented at least one image corresponds to any type of image, which may be a colored or a grayscale image.

Said at least one image can be the visual environment of the individual or a printed image, a printed eye chart or a printed optotype.

Said at least one image may also be visually presented by a display device, which is preferably suitable for displaying all the types of images described above.

### Step c) (block 300 of figure 1)

During or after step b) of visually presenting at least one image to the individual through a source of light scattering, the determining method comprises a measuring step in which the visual performance of the individual is assessed.

The visual performance may be measured by assessing different parameters such as the ones mentioned above.

The evaluation of the impact of the source of light scattering on the visual performance of the individual may be carried out qualitatively or quantitatively.

It may also be done either directly by the individual, who himself scores, verbally or via a response unit, the impact of the source of light scattering on his visual performance (for example, the individual gives a score comprised between 1 and 5 for his appreciation of contrast with the chosen source of light scattering), or indirectly by the individual who performs a test, the result of this test being the score given to the impact of the source of light scattering (for example, the result of a contrast sensitivity test or indeed the result of measuring eye positions, eye movement or pupil size).

The score given by the individual or the result of the indirect evaluation may be recorded.

### Step d) (block 400 of figure 2)

Step d) consists in providing one or more trial filters.

Providing one or more trial filters may be based on a selection of said one or more trial filters.

Provision may be made for the trial filter to be selected among a set of predetermined trial filters.

Thus, the objective is to select at least one trial filter. This selection may be based on different criteria such as the individual's needs, the individual's general health, visual health, ocular state, environment or the results of previous assessments, etc.

Once the individual's needs, general health, visual health, ocular state, environment or the results to previous tests, or any other selection criterion is defined, the trial filter may be selected based on at least one parameter defining said filter in order to find the most suitable filter corresponding to the selection criterion.

The trial filter may be defined by at least one of the following parameters:
- value of Tᵥ: percentage of visual transmission in the visible domain under photopic conditions such as defined in standard ISO 8980-3. It is defined in the wavelength range extending from 380 nm to 780 nm as the average weighted by the standard sensitivity V(λ) under photopic conditions of the eye under illuminant D65 (daylight). The visual transmission Tv under scotopic conditions may be defined in the same way with the standard sensitivity V'(λ) under scotopic conditions;
- spectral response: for example light-transmission datum as a function of wavelength, in the visible domain between 380 nm and 780 nm, and/or in the ultraviolet domain and/or in the infrared domain;
- spatial variation (for example gradient) of the reflectance or absorbance of a lens in the presence of the trial filter ("gradient" filter);
- temporal variation in one of the above parameters (for example photochromic or electro-chromic filter); or
- variation in the polarization state of the transmitted light.

The parameters of the trial filter will possibly be considered one after the other and tested in turn.

For example, if upon a previous contrast sensitivity test, the individual did not perceive any benefit with a trial filter, another filter with different transmission properties will be tested.

### Step e) (block 500 of figure 2)

Once the at least one trial filter has been selected, provision is made for a step of visually presenting to the individual the same at least one image previously presented in step b) through the chosen source of light scattering and the at least one colored filter.

In this way, it is possible for the individual to appreciate the impact that the trial filter has on the visually presented at least one image through the source of light scattering, and in particular on his visual comfort and/or his visual performance.

As explained above, said visually presented at least one image corresponds to any type of image, which may be a colored or a grayscale image.

Said at least one image can be the visual environment of the individual or a printed image, eye chart or optotype(s).

Said at least one image may also be visually presented by a display device, which is preferably suitable for displaying all the types of images described above.

### Step f1) (block 600 of figure 2)

During or after step e) of visually presenting at least one image to the individual through the chosen source of light scattering and the at least one colored filter, the determining method comprises a measuring step in which the selected trial filter is *"scored"* based on the visual performance of the individual.

The visual performance may be measured by assessing different parameters such as the ones mentioned above.

The evaluation of the benefit of the selected trial filter may be carried out qualitatively or quantitatively.

It may also be done either directly by the individual, who himself scores, verbally or via a response unit, the benefit of the trial filter on his visual performance (for example, the individual gives a score comprised between 1 and 5 for his appreciation of contrast with the chosen trial filter), or indirectly by the individual who performs a test, the result of this test being the score given to the benefit of the trial filter (for example, the result of a contrast sensitivity test or indeed the result of measuring eye positions, eye movement or pupil size).

The score given by the individual or the result of the indirect evaluation may be recorded.

Preferably, measuring step f1) is performed under the same conditions as those of measuring step c).

### Step g) (block 700 of figure 2)

Once the one or more results of measuring step f1) have been obtained, each is compared to the one or more results of measuring step c).

It may be desired to compare, in this step, the benefit of the trial filter to a situation in which the individual is wearing another filter that may either be a reference trial filter or indeed simply the trial filter tested beforehand. It is thus possible to adopt an incremental approach whereby an improvement in visual comfort or in visual performance is sought relative to another trial filter previously tested on the individual.

The reference trial filter may be a median filter in the sense that it meets the visual needs of half of a representative population of individuals.

The reference filter may even be:
- the filter that the wearer usually wears (current filter);
- the filter that delivers the best performance with respect to the criterion used to select the at least trial filter (the individual's need, environment etc...); or
- the last filter made available on the market.

### Step h) (block 800 of figure 2)

The prescription of the colored filter is validated or invalidated on the basis of the result of the comparison of step g).

A targeted validation (comparison with an absolute threshold) or indeed a relative validation (comparison with a relative threshold) of the trial filter may be sought.

If the comparison of step g) demonstrates an improvement in the individual's visual performance, then, in step h), said trial filter is adopted as being said colored filter suitable for the individual.

In contrast, if the comparison of step g) demonstrates a degradation in the individual's visual performance, then, in step h), the determining method is restarted from step d) with another trial filter being selected (see the dashed arrow between block 800 and block 400 in figure 1) and then steps e), f), g) and h) are repeated with this new trial filter. The optimization of the filter may therefore be iterative.

However, the iteration may be carried out even if the comparison demonstrates an improvement in the predefined criterion, so as to tend toward an optimal colored filter.

It is possible to imagine introducing a certain tolerance into the comparison of step g), so that a trial filter is considered to be validated or invalidated once the improvement or deterioration, respectively, is larger in absolute value than a predetermined tolerance value ε, depending in particular on the measurement precision.

This makes it possible to avoid having to carry out too many iterations and to rapidly converge towards an optimal colored filter.

At the end of the method, a colored filter that is suitable for the individual, will therefore have been determined.

### EXAMPLES

Seven examples of application of the determining method or associated device such as described above are described below.

### Method

The following examples can be performed using a device as described above. Also, according to a simpler embodiment, each element (source of light scattering and/ or colored filter) can just be placed directly before the individual's eye.

### Example 1: Identification of a "(non-)responder" to a colored filter

It is sought to determine if an individual is or not a responder to a colored filter.

The individual's contrast sensitivity is measured with his full correction. Then scatter is introduced and contrast sensitivity is measured again. Finally, colored filter(s) is(are) introduced in addition to scatter and contrast sensitivity is measured again.

If the trial filter(s) allows to improve contrast sensitivity, the individual can be ranked as a responder and the trial filter is selected. If the trial filter does not allow to improve contrast sensitivity, the individual can be ranked as a non-responder and the trial filter is not selected.

Here, the individual complains about poor vision when driving in fog. The method according to the invention is used to identify a (non-)responder to a colored filter. First, contrast sensitivity is measured when the individual is only wearing his usual glasses. Then, a clip-on is provided on the individual's frame, a Bangerter filter 0.6 is introduced and contrast sensitivity is measured again. Finally, a Kodak Wratten 12 yellow filter is added and contrast sensitivity is measured again. Step g) reveals a marked improvement. The individual is therefore a "responder" and is prescribed with said yellow filter.

### Example 2: Identification of a colored filter providing the most benefit to an individual

It is sought to determine the colored filter that brings the most benefit to an individual.

The individual's contrast sensitivity is measured with his full correction. Then scatter is introduced and contrast sensitivity is measured again. Finally, several colored filters are introduced one after the other, in addition to scatter. Contrast sensitivity is measured after introducing each new colored filter. The filter providing most of the benefit is chosen for the wearer.

Here, as in example 1, an individual complains about poor vision when driving in fog. The method according to the invention is used in order to identify the colored filter providing the most benefit to said individual. The individual's contrast sensitivity is measured while the individual is wearing his usual glasses and then contrast sensitivity is measured again under scattering conditions mimicking fog. A yellow filter is added, but does not provide any contrast sensitivity benefit. Then, the optometrist introduces a red filter, a green filter, and a blue filter, one after the other, and measures contrast sensitivity with each colored filter. Step g) reveals a marked improvement only with the green filter. The individual is therefore prescribed with said green filter.

### Example 3: Demonstration of the benefits provided by a colored filter

It is sought to demonstrate the benefits provided by a filter.

Indeed, several visual tests do not allow the individual to subjectively evaluate the change in his visual performance since a threshold value is usually sought e.g. visible/non-visible. Presenting a simulated loss and/or gain in vision using scatter and colored filters, respectively whilst a wearer is wearing his full correction may be beneficial for the wearer to believe in the performance of the filter.

The individual's contrast sensitivity is measured while wearing his usual glasses. Then scatter is introduced and contrast sensitivity is measured again. Colored filter(s) is(are) introduced in addition to scatter and contrast sensitivity is measured again. Finally, based on the collected data regarding contrast sensitivity measurements, a simulation of vision loss and/or gain is displayed on a screen and presented to the individual.

Here, the individual complains about poor vision when driving in fog. The method according to the invention is used to demonstrate the benefits provided by a colored filters. First, the individual's contrast sensitivity is objectively measured while the individual is wearing his usual glasses. Then contrast sensitivity is measured again under scattering conditions mimicking fog. Then, a yellow filter is added and contrast sensitivity is objectively measured again. The individual's contrast sensitivity under scattering conditions improves with the yellow filter. However, the individual is not able to appreciate the benefit of said yellow filter as it was measured objectively. Therefore, the optometrist uses a display unit in order to show the lowest contrast seen by the individual under scattering conditions without and with the yellow filter. The individual is thus able to appreciate the benefit of said yellow filter.

### Example 4: Assessment of the influence of different types of sources of light scattering on an individual's performance

It is sought to assess the influence of different types of sources of light scattering on an individual's performance.

Indeed, different types of conditions inducing scattering such as fog, rain, night, scratched glasses, smudges, etc. may have differential effect on an individual's contrast sensitivity.

The individual's contrast sensitivity is measured with his full correction. Then scatter is introduced and contrast sensitivity is measured again. Colored filter(s) is(are) introduced in addition to scatter and contrast sensitivity is measured again. Finally, different sources of light scattering are introduced one after the other, in addition to colored filter(s). Contrast sensitivity is measured after introducing each new source of light scattering.

Here, the method according to the invention is used for assessing the influence of different types of sources of light scattering on an individual's performance. First, the individual's contrast sensitivity is measured while the individual is wearing only his usual glasses. Then contrast sensitivity is measured again under a given scattering condition. A colored filter is added and contrast sensitivity is measured again. Then, different sources of light scattering are introduced one after the other and contrast sensitivity is measured each time. The influence of different types of sources of light scattering on the individual's performance is thus assessed.

### Example 5: Assessment of the benefits provided by a colored filter based on different visuospatial scales

It is sought to assess the benefits provided by a colored filter based on different visuospatial scales.

The individual's contrast sensitivity is measured with his full correction. Then scatter is introduced and contrast sensitivity is measured again. Colored filter(s) is(are) introduced in addition to scatter and contrast sensitivity is measured again. Finally, contrast sensitivity is assessed at different visuospatial scales.

Here, the method according to the invention is used to measure the individual's contrast sensitivity loss after introducing a Bangerter filter 0.6 and (potential) gain after introducing a Kodak Wratten 12 yellow filter at different visuospacial scales.

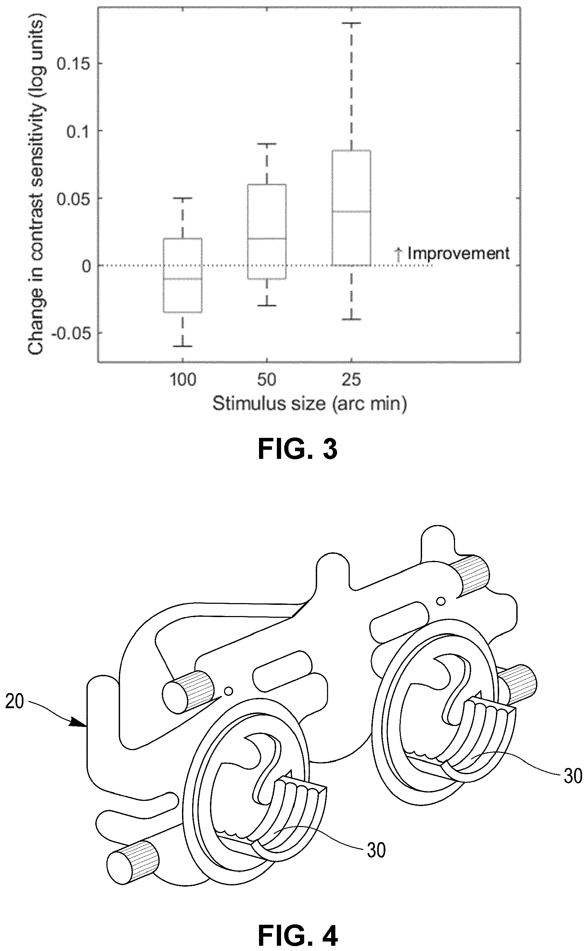

Figure 3 shows that under scattering conditions, said yellow filter provided a better improvement in contrast sensitivity for smaller stimuli having finer detail. In other words, the benefits of said yellow filter are most relevant when processing of finer detail is required. The gain of contrast sensitivity is therefore scale dependent.

### Device

### Example 6: Ophthalmic trial frame

Figure 4 shows an ophthalmic trial frame 20 comprising a set of slots 30 and intended to be worn by an individual for whom it is sought to determine an optimal colored filter in order to restore or maintain his visual comfort and/or his visual performance.

This device is thus particularly suitable for implementing the determining method of the invention, which method was described above.

On the whole, this ophthalmic trial frame is a conventional ophthalmic trial frame with enough slots allowing the insertion of individual's prescription, scattering filters and colored filters.

### Example 7: Phoropter

A phoropter comprising a set of slots and intended to be placed in front of an individual's eyes may be used to determine an optimal colored filter in order to restore or maintain his visual comfort and/or his visual performance.

This device is thus particularly suitable for implementing the determining method of this invention, which method was described above.

On the whole, the phoropter is a conventional phoropter with additional slots allowing the insertion of scattering filters and colored filters.

### Example 8: Ophthalmic frame implemented with a clip-on having multiple slots

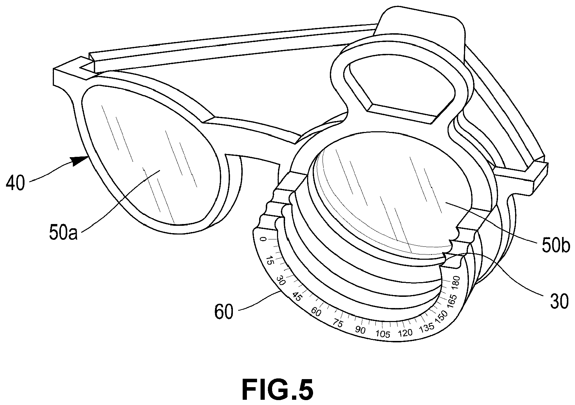

Figure 5 shows an ophthalmic frame 40 comprising a pair of corrective lenses 50a and 50b implemented with a clip-on 60 having a set of slots 30 and intended to be worn by an individual for whom it is sought to determine an optimal colored filter in order to restore or maintain his visual comfort and/or his visual performance.

This device is thus particularly suitable for implementing the determining method of the invention, which method was described above.

On the whole, the individual's own ophthalmic frame is implemented with a clip-on having multiple slots allowing the insertion of scattering filters and colored filters.

### Example 9: Active eyewear

An active eyewear intended to be placed in front of an individual's eyes may be used to determine an optimal colored filter in order to restore or maintain his visual comfort and/or his visual performance.

This device is thus particularly suitable for implementing the determining method of this invention, which method was described above.

On the whole, in such an active eyewear, the colored filter may provide by an electrochromics cell, for example the one disclosed in WO2017032649. The scattering filter can be provided for example by a polymer dispersed liquid crystal (PDLC) lens that can change electrically the light scattering state. Such technology that can deliver electrically variable haze eyewear is described for example in patent US2014226096.

## Claims

1. A method for determining at least one colored filter suitable for being applied to an ophthalmic lens in order to improve or maintain the visual comfort and/or the visual performance of an individual who wears said ophthalmic lens, said method comprising:
a) selecting (100) at least one source of light scattering intended to be placed in front of an eye of the individual based on the degree of scattering needed;
b) visually presenting (200) at least one image to the individual through said at least one source of light scattering;
c) measuring (300) the individual's visual performance when said at least one image is visually presented through said at least one source of light scattering;
d) providing (400) at least one colored filter intended to be placed in front of an eye of the wearer;
e) visually presenting (500) the same at least one image of step b) to said individual through said at least one source of light scattering and said at least one colored filter;
f1) measuring (600) the individual's visual performance when said at least one image is visually presented through said at least one source of scattering and said at least one colored filter;
g) comparing (700) the individual's visual performance measured in step c) with the individual's visual performance measured in step f1);
h) determining (800) if said colored filter is a suitable colored filter based on the result of the comparison of step g).

2. The method according to claim 1, wherein step a) further comprises providing a reference filter to be placed in front of the eye of the individual and wherein steps b) to h) are each further performed in the presence of said reference filter placed in front of the eye of the individual.

3. The method according to claim 1 or 2, wherein in step h), said colored filter is adopted as being said suitable colored filter if said comparison of step g) demonstrates an improvement of the individual's visual performance.

4. The method according to claim 1 or 2, wherein in step h), said colored filter is not adopted as being a suitable colored filter if said comparison of step g) demonstrates a degradation in said individual's visual performance and wherein the method is restarted from step d) with another at least one colored filter being provided or from step a) with another at least one source of light scattering and with another at least one colored filter being provided.

5. The method according to any one of the preceding claims, wherein the at least one source of light scattering is selected from a diffuser, a Bangerter filter, a smudged lens, a scratched lens, a fog maker or a polymer dispersed liquid crystal (PDLC) lens.

6. The method according to any one of the preceding claims, wherein the individual's visual performance is measured by assessing contrast sensitivity.

7. The method according to any one of the preceding claims, wherein the at least one image of steps b) and e) is the visual environment of the individual or at least one printed image, printed eye chart or printed optotype.

8. The method according to any one of claims 1 to 6, wherein the at least one image of steps b) and e) is visually presented to the individual by a display unit.

9. The method of claim 8, wherein the display unit is further implemented in combination with an image processing unit.

10. The method according to any one of the preceding claims, wherein the at least one image of steps b) and e) is an eye chart selected from a Pelli-Robson chart, a Vision contrast test system (VCTS) by Vistech, a Melbourne Edge test, a Mars Letter Contrast sensitivity test, a Functional Acuity Contrast Test (FACT), a Cambridge low contrast, Regan charts, a Bailey Lovie chart, an Arden plate test, a CSV-1000 E test, a CSV-1000 RS test, a CSV-1000-S test, a CSV-1000 CVA test, a CSV-1000 LAN C test and a CSV-1000 1.5 CPD.

11. The method according to any one of the preceding claims, wherein steps c) and f1) are based on the individual's input by verbal responses or by using a response unit.

12. The method according to any one of the preceding claims, further comprising a step of adjusting the at least one image of steps b) and e) based on the individual's input.

13. The method according to any one of the preceding claims, further comprising:
f2) processing the collected data obtained from steps c) and f1) with a data processing unit and visualizing the obtained processed data so as to perform the comparison step g).

14. The method according to claim 13, wherein the obtained processed data is used to simulate the decreased and/or improved vision of the individual.

15. The method according to claim 14, wherein the simulated decrease and/or improved vision of the individual is displayed by a display unit in order to demonstrate the benefits or disadvantages due to the at least one colored filter to the individual.
